# EUROPÄISCHE PATENTSCHRIFT

(11) **EP 3 482 080 B1**
(45) Veröffentlichungstag und Bekanntmachung des Hinweises auf die Patenterteilung: **10.01.2024**
(21) Anmeldenummer: 17712729.7
(22) Anmeldetag: 17.03.2017
(51) Int. Cl.: F04D 17/12, F04D 19/02, F04D 25/02, F04D 25/04, F04D 29/58, F28D 9/00, F01D 15/08, F01D 15/12

(54) **GETRIEBETURBOMASCHINE**
TURBO-MACHINE WITH GEAR DRIVE
TURBOMACHINE AVEC TRANSMISSION PAR ENGRENAGE

(30) Priorität: 07.07.2016 DE 102016112453
(43) Veröffentlichungstag der Anmeldung: 15.05.2019
(73) Patentinhaber: MAN Energy Solutions SE, 86153 Augsburg (DE)
(72) Erfinder: BULJINA, Irhad, 46047 Oberhausen (DE); FAULHABER, Stephan, 44339 Dortmund (DE)
(86) Internationale Anmeldenummer: PCT/EP2017/056337
(87) Internationale Veröffentlichungsnummer: WO 2018/007029

(56) Entgegenhaltungen:
- EP-A1- 1 010 954
- EP-A1- 1 984 628
- EP-A1- 2 604 862
- DE-A1- 2 161 604
- DE-U1-202015 000 883
- US-A1- 2003 059 299
- US-A1- 2013 139 509

## Beschreibung

Die Erfindung betrifft eine Getriebeturbomaschine.

Aus der DE 10 2012 022 131 A1 ist eine Getriebeturbomaschine mit einem Getriebe, mit einem Antriebsaggregat und mit mehreren Abtriebsaggregaten bekannt, wobei diese Komponenten der Getriebeturbomaschine zu einem Maschinenstrang integriert sind. Das Getriebe verfügt über ein zentrales Großrad mit einer Großradwelle, wobei mehrere auf Ritzelwellen gelagerte Ritzel in das Großrad kämmen. Beim Antriebsaggregat handelt es sich vorzugsweise um eine Dampfturbine. Bei den Abtriebsaggregaten handelt es sich vorzugsweise um Kompressoren, nämlich um einen Hauptkompressor und mehrere Getriebekompressoren.

Aus der EP 2 604 862 A1 ist eine weitere Getriebeturbomaschine mit einem Antriebsaggregat, einem Hauptkompressor und mehreren Getriebekompressoren bekannt. Ferner offenbart die EP 2 604 862 A1 mit diesen Kompressoren zusammenwirkende Kühler, nämlich Zwischenkühler und einen Endkühler.

Weitere Turbokompressoren sind aus EP 2 604 862 A1, DE 20 2015 000883 U1, US 2003/059299 A1, EP 1 010 954 A1, EP 1 984 628 A1 und US2013139509A1 bekannt.

Im Bereich der Zwischenkühler sowie des Endkühlers von aus dem Stand der Technik bekannten Getriebeturbomaschinen kommen als Wärmetauscher Rippenrohrbündelwärmetauscher zum Einsatz. Derartige Rippenrohrbündelwärmetauscher verfügen zwar über einen relativ geringen Druckverlust, die Wärmeübertragung solcher Rippenrohrbündelwärmetauscher ist jedoch begrenzt. Insbesondere bei Getriebeturbomaschinen mit hohen Leistungen von mehr als 100.000Nm³/h kommen daher relativ großbauende Kühler zum Einsatz, die über entsprechend dimensionierte Rippenrohrbündelwärmetauscher verfügen.

Um jedoch wirtschaftliche Getriebeturbomaschinen mit hohen Leistungen bereitstellen zu können, müssen die Kühler der Getriebeturbomaschinen kompakt bauen. Dies ist bislang nicht möglich. Es besteht Bedarf an einer Getriebeturbomaschine, die weniger Bauraum benötigt.

Hiervon ausgehend liegt der Erfindung die Aufgabe zu Grunde, eine neuartige Getriebeturbomaschine zu schaffen.

Diese Aufgabe wird durch eine Getriebeturbomaschine gemäß Anspruch 1 gelöst. Jeder Zwischenkühler und der Endkühler der erfindungsgemäßen Getriebeturbomaschine weisen jeweils ein Gehäuse mit einen Zulaufstutzen für das zu kühlende zweite Prozessgas und einen Ablaufstutzen für das gekühlte zweite Prozessgas und einen im Gehäuse aufgenommen Wärmetauscher auf. Mindestens ein Zwischenkühler und/oder der Endkühler weisen einen Wärmetauscher in Plattenbauweise auf.

Bei der erfindungsgemäßen Getriebeturbomaschine kommen im Bereich mindestens eines Kühlers Plattenwärmetauscher zum Einsatz. Vorzugsweise kommen vollverschweißte Plattenwärmetauscher zum Einsatz. Derartige Plattenwärmetauscher verfügen über eine bessere Wärmeübertragung, sodass die Wärmetauscher und damit letztendlich die Kühler kompakter ausgeführt werden können. Hiermit kann eine besonders kompakte Bauform einer Getriebeturbomaschine bereitgestellt werden.

Nach einer ersten vorteilhaften Weiterbildung weisen jeder Zwischenkühler und der Endkühler einen Wärmetauscher in Plattenbauweise auf. Derartige Plattenwärmetauscher verfügen über eine hohe Wärmeübertragung und können daher zur Realisierung einer besonders kompakten Bauform der Getriebeturbomaschine genutzt werden.

Nach einer zweiten, alternativen Weiterbildung weist zumindest ein Zwischenkühler zwischen einer Axialstufe des ersten Abtriebsaggregats und einer Radialstufe des ersten Abtriebsaggregats einen Wärmetauscher in Plattenbauweise auf. Mindestens ein weiterer Zwischenkühler und/oder der Endkühler weist einen Wärmetauscher in Rippenrohrbündelbauweise auf. Diese Weiterbildung der Erfindung, die im Bereich mindestens eines Zwischenkühlers einen Wärmetauscher in Plattenbauweise und im Bereich eines anderen Zwischenkühlers und/oder des Endkühlers einen Wärmetauscher in Rippenrohrbündelbauweise nutzt, ist besonders bevorzugt, um angepasst an den jeweiligen Kühlbedarf des jeweiligen Kühlers einerseits eine kompakte Bauform des jeweiligen Kühlers zu gewährleisten, andererseits über die gesamte Getriebeturbomaschine einen geringen Druckverlust durch die Kühler zu gewährleisten. Ein solches Hybridkonzept, welches demnach sowohl Wärmetauscher in Rippenrohrbündelbauweise als auch Wärmetauscher in Plattenbauweise im Bereich der Kühler nutzt, ist besonders bevorzugt.

Erfindungsgemäß sind Plattenelemente des jeweiligen Plattenwärmetauschers verschweißt. Dies erhöht den Wirkungsgrad der Kühlung im Bereich des jeweiligen Kühlers.

Vorzugsweise weist das Gehäuse des jeweiligen Kühlers eine zylindrische oder rohrartige Mantelwand auf, wobei der Zulaufstutzen und der Ablaufstutzen an einer Axialposition der Mantelwand nebeneinander an der Mantelwand positioniert sind. Über diese Relativausrichtung von Zulaufstutzen und Ablaufstutzen kann der entsprechende Kühler besonders bauraumsparend in die Getriebeturbomaschine integriert werden.

Vorzugsweise nimmt das Gehäuse des jeweiligen Kühlers ein Strömungsvergleichmäßigungselement auf, welches stromabwärts des Zulaufstutzens und stromaufwärts des Wärmetauschers positioniert ist. Dies kann zu einer weiteren Reduzierung der Baugröße des jeweiligen Kühlers und damit letztendlich zur Reduzierung des Bauraumbedarfs der Getriebeturbomaschine genutzt werden. Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Blockschaltbild einer erfindungsgemäßen Getriebeturbomaschine;
- Fig. 2: eine schematisierte, perspektivische Ansicht eines Getriebes der Getriebeturbomaschine gemäß Fig. 1;
- Fig. 3a bis 3c: unterschiedliche Ansichten eines ersten Kühlers der Getriebeturbomaschine; und
- Fig. 4a bis 4c: unterschiedliche Ansichten eines zweiten Kühlers der Getriebeturbomaschine.

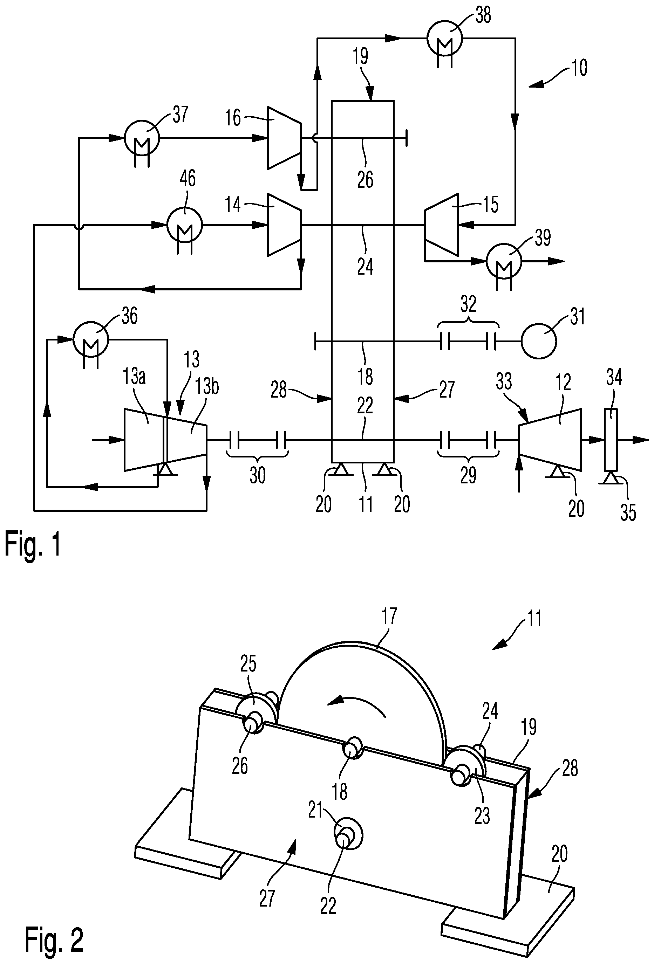

Fig. 1 und 2 zeigen ein exemplarisches Ausführungsbeispiel einer Getriebeturbomaschine 10. Die Getriebeturbomaschine 10 umfasst ein integriertes Getriebe 11, ein Antriebsaggregat 12, mehrere Abtriebsaggregate 13, 14, 15 und 16, wobei das Getriebe 11, das Antriebsaggregat 12 und die mehreren Abtriebsaggregate 13, 14, 15 und 16 zu einem Maschinenstrang integriert sind.

Das Getriebe 11 der Getriebeturbomaschine 10 umfasst ein Großrad 17, das auf einer Großradwelle 18 positioniert und über die Großradwelle 18 in einem Getriebegehäuse 19 des Getriebes 11 drehbar gelagert ist. In das Großrad 17 des Getriebes 11 kämmen am Umfang desselben mehrere Ritzel 21, 23, 25 ein, die auf Ritzelwellen 22, 24, 26 befestigt und über die Ritzelwellen 22, 24 und 26 ebenfalls im Getriebegehäuse 19 drehbar gelagert sind.

Im Ausführungsbeispiel kämmen am Umfang des Großrads 11 insgesamt drei derartige auf Ritzelwellen 22, 24 und 26 gelagerte Ritzel 21, 23 und 25 in das Großrad 17 ein.

Das Antriebsaggregat 11 ist als Dampfturbine ausgebildet, in welcher zur Bereitstellung mechanischer Antriebsleistung ein erstes Prozessgas entspannt wird. Das Antriebsaggregat 12 ist mit einer ersten Ritzelwelle 22 des Getriebes 11 gekoppelt, nämlich auf einer ersten Seite 27 des Getriebes 11 bzw. des Getriebegehäuses 19, wobei das als Dampfturbine ausgebildete Antriebesaggregat 12 über eine erste Kupplung 29 an die erste Ritzelwelle 22 gekoppelt ist.

Zu den mehreren Abtriebsaggregaten 13, 14, 15 und 16 zählen ein erstes, als Hauptkompressor ausgebildetes Abtriebsaggregat 13 sowie mehrere zweite, als Getriebekompressoren ausgebildete Abtriebsaggregate 14, 15 und 16. Der Hauptkompressor bzw. das erste Abtriebsaggregat 13 ist mindestens zweistufig mit den Hauptkompressorstufen 13a, 13b ausgebildet, wobei in dem Hauptkompressor unter Nutzung der vom Antriebsaggregat 12 bereitgestellten mechanischen Antriebsleistung ein zweites Prozessgas verdichtet wird.

Das erste Abtriebsaggregat 13 bzw. der Hauptkompressor ist ebenfalls mit der ersten Ritzelwelle 22 des Getriebes 11 gekoppelt, nämlich auf einer der ersten Seite 27 gegenüberliegenden, zweiten Seite 28 des Getriebes 11 bzw. Getriebegehäuses 19. Dabei greift das als Hauptkompressor ausgebildete, erste Antriebsaggregat 13 über eine zweite Kupplung 30 an der ersten Ritzelwelle 22 an, an welche auch das Antriebsaggregat 12 über die erste Kupplung 29 gekoppelt ist. Dann, wenn die erste Kupplung 29 und die zweite Kupplung 30 beide geschlossen sind, stehen das Antriebsaggregat 12 und das als Hauptkompressor ausgebildete erste Abtriebsaggregat 13 direkt bzw. unmittelbar ohne Zwischenschaltung einer Übersetzungsstufe des Getriebes 11 miteinander in Wirkverbindung, sodass dieselben mit gleicher Drehzahl drehen.

Die Getriebeturbomaschine 10 der Fig. 1 und 2 umfasst zusätzlich zum Antriebsaggregat 12 und dem als Hauptkompressor ausgebildeten ersten Abtriebsaggregat 13 drei zweite Abtriebsaggregate 14, 15 und 16, die als Getriebekompressoren ausgebildet sind. Es könne auch nur zwei oder mehr als drei Getriebekompressoren vorhanden sein. In den als Getriebekompressoren ausgebildeten zweiten Abtriebsaggregaten 14, 15 und 16 wird unter Nutzung der vom Antriebsaggregat 12 bereitgestellten mechanischen Antriebsleistung das zweite Prozessgas weiter verdichtet, wobei die zweiten Abtriebsaggregate 14, 15 und 16 mit weiteren Ritzelwellen 24, 26 des Getriebes 11 gekoppelt sind.

So sind in dem Ausführungsbeispiel der Fig. 1 und 2 die drei weiteren, zweiten Abtriebsaggregate 14, 15 und 16 mit zwei weiteren Ritzelwellen 24 und 26 gekoppelt, nämlich derart, dass die beiden Getriebekompressoren 24 und 25 an gegenüberliegenden Seiten 27 und 28 des Getriebes 11 bzw. Getriebegehäuses 19 mit einer zweiten Ritzelwelle 24 des Getriebes 11 gekoppelt sind, wohingegen der Getriebekompressor 16 mit einer dritten Ritzelwelle 26 des Getriebes 11 gekoppelt ist, vorzugsweise im Bereich derjenigen Seite 28 des Getriebegehäuses 19, an welcher auch der Getriebekompressor 14 und der Hauptkompressor 13 positioniert sind.

Der Hauptkompressor 13 wird auch als MAC-Kompressor bezeichnet und ist vorzugsweise als Radialkompressor ausgebildet. Die erste Hauptkompressorstufe 13a des Hauptkompressors 13 ist vorzugsweise eine Axialstufe, die zweite Hauptkompressorstufe 13b des Hauptkompressors 13 ist vorzugsweise eine Radialstufe.

Die Getriebekompressoren 14, 15 und 16 werden auch als Boost-Kompressoren oder BAC-Kompressoren bezeichnet. Die Getriebekompressoren 14, 15 und 16 sind vorzugsweise Radialkompressoren.

Die Einheit aus Getriebe 11 und Radial-Getriebekompressoren 14, 15 und 16 wird auch als Radial-Gear-Kompressor oder als RG-Kompressor bezeichnet.

Im Ausführungsbeispiel der Fig. 1 und 2 ist die erste Ritzelwelle 22 zusammen mit dem auf derselben gelagerten, ersten Ritzel 21 in etwa an der 6-Uhr-Position des Großrads 17 positioniert und kämmt über das Ritzel 21 an dieser Position in das Großrad 17 ein. Die zweite Ritzelwelle 24 mit dem Ritzel 23 ist in etwa an der 3-Uhr-Position und die dritte Ritzelwelle 26 mit dem Ritzel 25 ist in etwa an der 9-Uhr-Position des Großrads 17 positioniert, wobei diese Ritzel 23 und 25 an diesen Positionen in das Großrad 17 kämmen.

Wie in Fig. 1a gezeigt, kann an die Großradewelle 18 des Getriebes 11 ein optionaler Generator 31 oder auch alternativ Motor gekoppelt sein, nämlich über ein Kupplung 32.

Wie bereits ausgeführt, ist das als Hauptkompressor ausgebildete erste Abtriebsaggregat 13 mehrstufig mit mehreren Kompressorstufen bzw. Verdichterstufen ausgebildet, wobei in Fig. 1a exemplarisch zwei Hauptkompressorstufen 13a, 13b gezeigt sind.

Das Getriebe 11 zusammen mit den Getriebekompressoren 14, 15 und 16, das als Dampfturbine ausgebildete Antriebsaggregat 12 sowie das als Hauptkompressor ausgebildete erste Abtriebsaggregat 13 sind vorzugsweise auf einem gemeinsamen Fundamenttisch 20 eines Maschinenfundaments gelagert.

Im Bereich der Dampfturbine bzw. des Antriebsaggregats 12 kommt ein axiales Abdampfgehäuse 33 zum Einsatz, sodass entspanntes erstes Prozessgas die Dampfturbine 12 in axialer Richtung verlässt.

Ein stromabwärts der Dampfturbine 12 positionierter Kondensator 34 ist dann vorzugsweise in Richtung einer Längsachse der Dampfturbine 12 gesehen neben dem die Dampfturbine 12 tragenden Fundamenttisch 12 des Maschinenfundaments positioniert, und zwar vorzugsweise auf separaten Stützen 35.

Wie Fig. 1 entnommen werden kann, umfasst die Getriebeturbomaschine 10 mehrere Kühler 36, 37, 38, 39 und 46.

Beim Kühler 36 handelt es sich um einen Zwischenkühler, der zwischen die beiden Hauptkompressorstufen 13a, 13b des Hauptkompressors 13 geschaltet ist.

Bei den Kühlern 46, 37 und 38 handelt es sich ebenfalls um Zwischenkühler, nämlich beim Kühler 46 um einen Zwischenkühler zwischen der zweiten Hauptkompressorstufe 13b und dem ersten Getriebekompressor 14, bei dem Kühler 37 um einen Zwischenkühler zwischen dem ersten Getriebekompressor 14 und dem zweiten Getriebekompresssor 16 und bei dem Kühler 38 um einen Zwischenkühler zwischen dem zweiten Getriebekompressor 16 und dem dritten Getriebekompressor 15.

Beim Kühler 39 handelt es sich um einen Endkühler stromabwärts des dritten Getriebekompressors 15.

Jeder Kühler 36, 37, 38, 39, 46 der Getriebeturbomaschine 10 verfügt über ein Gehäuse 40 mit einer zylindrischen bzw. rohrförmigen Mantelwand 47, wobei an der Mantelwand 47 einerseits ein Zulaufstutzen 41 für das jeweils zu kühlende zweite Prozessgas und ein Ablaufstutzen 42 für das gekühlte zweite Prozessgas ausgebildet ist.

Die Mantelwand 47 des Gehäuses 40 des jeweiligen Kühlers 36, 37, 38, 39, 46 definiert einen Hohlraum bzw. Innenraum des jeweiligen Gehäuses 40, in welchem ein Wärmetauscher 43 aufgenommen ist, der einerseits vom zu kühlenden, zweiten Prozessgas und andererseits von einem Kühlmedium durchströmt ist.

In diesem vom Gehäuse 40 definierten Hohlraum sind weiterhin Trennelemente 45 aufgenommen, welche die Strömung des zu kühlenden zweiten Prozessgases von der Strömung des bereits gekühlten zweiten Prozessgases trennen, um so sicherzustellen, dass über den Zulaufstutzen 41 geführtes, zu kühlendes zweites Prozessgas zwingend über den Wärmetauscher 43 geführt wird, bevor es als gekühltes zweites Prozessgas über den Ablaufstutzen 42 abgeführt werden kann. Eine Durchmischung von zu kühlendem zweitem Prozessgas und gekühltem zweiten Prozessgas innerhalb des jeweiligen Kühlers wird demnach durch die Trennelemente 45 vermieden.

Mindestens ein Kühler, nämlich mindestens ein Zwischenkühler 36, 37, 38, 46 und/oder der Endkühler 39, weist einen Wärmetauscher 43 in Plattenbauweise, also einen Plattenwärmetauscher auf. Derartige Plattenwärmetauscher verfügen über einen hohen Wärmeübergang und erlauben so eine effektive Kühlung des zweiten Prozessgases bei geringem benötigtem Bauraum.

Im gezeigten, bevorzugten Ausführungsbeispiel weist zumindest der Zwischenkühler 36, der zwischen die als Axialstufe ausgebildete erste Hauptkompressorstufe 13 und die als Radialstufe ausgebildete zweite Hauptkompressorstufe 13b geschaltet ist, einen Wärmetauscher 43 in Plattenbauweise auf. Im Bereich dieses Zwischenkühlers 36 herrscht ein besonders hoher Kühlbedarf, wobei dann dieser Kühlbedarf unter Gewährleistung einer besonders kompakten Bauform des Zwischenkühlers 36 bereitgestellt werden kann.

Es ist möglich, einen weiteren Zwischenkühler 38 und 46 sowie auch den Endkühler 39 mit Plattenwärmetauschern 43 auszustatten.

Bevorzugt ist es jedoch, nur solche Kühler mit Plattenwärmetauschern auszurüsten, im Bereich derer ein hohe Kühlleistung benötigt wird, und solche Kühler, in denen eine relativ geringe Kühlleistung benötigt wird, Rohrbündelwärmetauscher zu nutzen, da dieselben über einen geringeren Druckverlust verfügen als Plattenwärmetauscher.

Besonders bevorzugt ist demnach eine Ausgestaltung der Getriebeturbomaschine 10, bei welcher angepasst an den benötigten Kühlbedarf des jeweiligen Kühlers 36, 37, 38, 39, 46 unter Gewährleistung einer möglichst kompakten Bauform der Getriebeturbomaschine 10 sowie unter Gewährleistung eines möglichst geringen Druckverlusts im Bereich erster Kühler als Wärmetauscher Plattenwärmetauscher und im Bereich zweiter Kühler als Wärmetauscher Rippenrohrbündelwärmetauscher zum Einsatz kommen. Ein derartiges Hybridkonzept für die Kühler der Getriebeturbomaschine ist besonders bevorzugt.

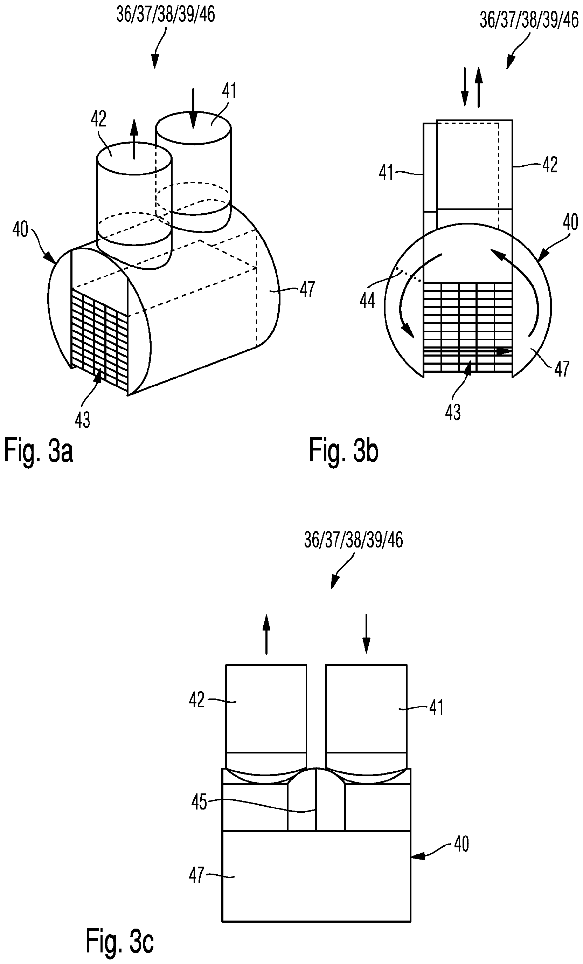

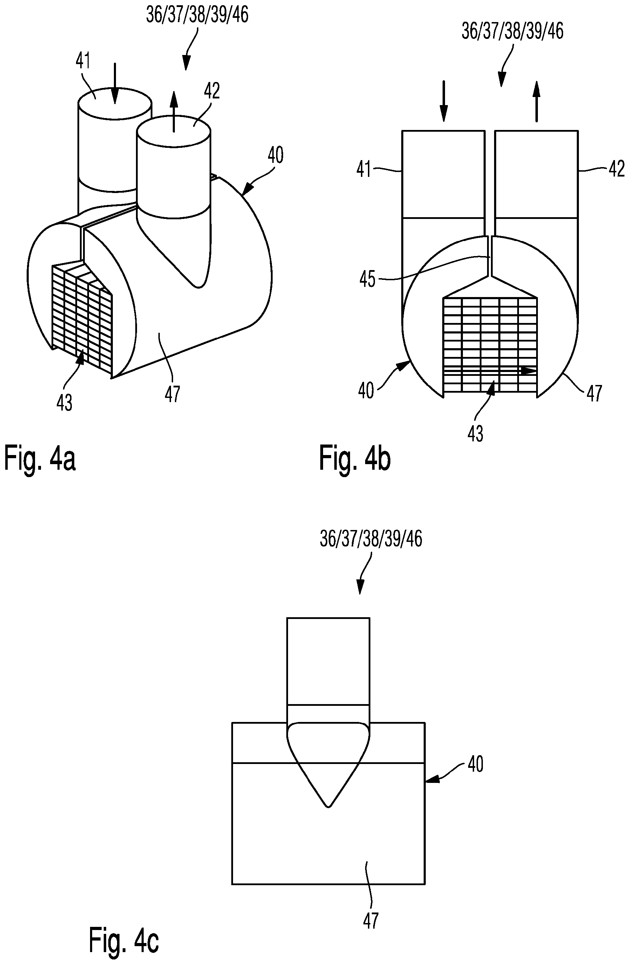

In der in Fig. 3a, 3b und 3c gezeigten Variante eines Kühlers 36, 37, 38, 39, 46 sind Zulaufstutzen 41 und Ablaufstutzen 42 für das zweite Prozessgas in Axialposition der Mantelwand 47 hintereinander an der Mantelwand 47 positioniert. Demgegenüber zeigen Fig. 4a, 4b, 4c eine Variante, in welcher der Zulaufstutzen 41 und der Ablaufstutzen 42 an einer Axialposition der Mantelwand 47 nebeneinander an derselben positioniert sind. Hierdurch kann die gewünschte Relativposition des jeweiligen Kühlers im Vergleich zu den anderen Baugruppen der Getriebeturbomaschine angepasst werden, um eine besonders kompakte Bauform der Getriebeturbomaschine zu gewährleisten.

Fig. 3b kann entnommen werden, dass das Gehäuse 40 des dort gezeigten Kühlers ein Strömungsvergleichmäßigungselement 44 aufnimmt, welches stromabwärts des Zulaufstutzens 41 und stromaufwärts des jeweiligen Wärmetauschers 43 angeordnet ist.

Bei einem derartigen Strömungsvergleichmäßigungselement 44 kann es sich um ein plattenartiges Lochblech handeln, welches gewährleistet, dass der gesamte Wärmetauscher 43 gleichmäßig vom zu kühlenden, zweiten Medium durchströmt wird. Hierdurch kann die Effektivität der Kühlung gesteigert werden und den Bauraumbedarf eines Kühlers weiter zu reduzieren.

### Bezugszeichenliste

- 10: Getriebeturbomaschine
- 11: Getriebe
- 12: Antriebsaggregat / Dampfturbine
- 13: erstes Abtriebsaggregat / Hauptkompressor
- 13a: Hauptkompressorstufe
- 13b: Hauptkompressorstufe
- 14: zweites Abtriebsaggregat / Getriebekompressor
- 15: zweites Abtriebsaggregat / Getriebekompressor
- 16: zweites Abtriebsaggregat / Getriebekompressor
- 17: Großrad
- 18: Großradwelle
- 19: Getriebegehäuse
- 20: Fundamenttisch
- 21: erstes Ritzel
- 22: erste Ritzelwelle
- 23: zweites Ritzel
- 24: zweite Ritzelwelle
- 25: drittes Ritzel
- 26: dritte Ritzelwelle
- 27: Seite
- 28: Seite
- 29: Kupplung
- 30: Kupplung
- 31: Generator
- 32: Kupplung
- 33: Abströmgehäuse
- 34: Kondenstaor
- 35: Stütze
- 36: Zwischenkühler
- 37: Zwischenkühler
- 38: Zwischenkühler
- 39: Endkühler
- 40: Gehäuse
- 41: Zulaufstutzen
- 42: Ablaufstutzen
- 43: Wärmetauscher
- 44: Strömungsvergleichmäßigungselement
- 45: Trennelement
- 46: Zwischenkühler
- 47: Mantelwand

## Patentansprüche

1. Getriebeturbomaschine (10), die ein Getriebe (11), ein Antriebsaggregat (12), und mehrere Abtriebsaggregate (13, 14, 15, 16) aufweist, die zu einem Maschinenstrang integriert sind;
wobei das Getriebe (11) ein zentrales Großrad (17) mit einer Großradwelle (18) und mehrere in das Großrad (17) kämmende Ritzel (21, 23, 25) mit Ritzelwellen (22, 24, 26) umfasst;
wobei das Antriebsaggregat (12) als Dampfturbine ausgebildet ist, in welcher zur Bereitstellung mechanischer Antriebsleistung ein erstens Prozessgas entspannt wird;
wobei ein erstes Abtriebsaggregat (13) als mindestens zweistufiger Hauptkompressor ausgebildet ist, in welchem unter Nutzung der vom Antriebsaggregat (12) bereitgestellten mechanischen Antriebsleistung ein zweites Prozessgas verdichtet wird, wobei zwischen jeweils zwei Stufen des Hauptkompressors (13) jeweils ein Zwischenkühler (36) geschaltet ist, um das zweite Prozessgas zu kühlen;
wobei mehrere zweite Abtriebsaggregate (14, 15, 16) als Getriebekompressoren ausgebildet sind, in welchen unter Nutzung der vom Antriebsaggregat (12) bereitgestellten mechanischen Antriebsleistung das zweite Prozessgas weiterverdichtet wird, wobei zwischen die letzte Stufe des Hauptkompressors (13) und den ersten Getriebekompressor (14) und zwischen jeweils zwei Getriebekompressoren (14, 15, 16) jeweils ein Zwischenkühler (37, 38, 46) und stromabwärts des letzten Getriebekompressors (15) ein Endkühler (39) angeordnet ist, um das zweite Prozessgas zu kühlen;
**dadurch gekennzeichnet, dass**
jeder Zwischenkühler (36, 37, 38, 46) und der Endkühler (39) jeweils ein Gehäuse (40) mit einem Zulaufstutzen (41) für das zu kühlende zweite Prozessgas und einem Ablaufstutzen (42) für das gekühlte zweite Prozessgas und einen im Gehäuse (40) aufgenommen Wärmetauscher (43) aufweist, wobei mindestens ein Zwischenkühler (36, 37, 38, 46) und/oder der Endkühler (39) einen Wärmetauscher (43) in Plattenbauweise aufweist,
wobei Plattenelemente des jeweiligen Plattenwärmetauschers (43) verschweißt sind.

2. Getriebeturbomaschine nach Anspruch 1, **dadurch gekennzeichnet, dass** jeder Zwischenkühler (37, 38, 46) und der Endkühler (39) einen Wärmetauscher (43) in Plattenbauweise aufweist.

3. Getriebeturbomaschine nach Anspruch 1, **dadurch gekennzeichnet, dass** zumindest ein Zwischenkühler (36) zwischen einer Axialstufe (13a) des ersten Abtriebsaggregats (13) und einer Radialstufe (13b) des ersten Abtriebsaggregats (13) einen Wärmetauscher (43) in Plattenbauweise aufweist.

4. Getriebeturbomaschine nach Anspruch 1 bis 3, **dadurch gekennzeichnet, dass** mindestens ein weiterer Zwischenkühler (37, 38, 46) und/oder der Endkühler (39) einen Wärmetauscher (43) in Rippenrohrbündelbauweise aufweist.

5. Getriebeturbomaschine nach Anspruch 4, **dadurch gekennzeichnet, dass** mindestens ein weiterer Zwischenkühler (37, 38, 46) und/oder der Endkühler (39) einen Wärmetauscher (43) in Plattenbauweise aufweist.

6. Getriebeturbomaschine nach einem der Ansprüche 1 bis 5, **dadurch gekennzeichnet, dass** das Gehäuse des jeweiligen Kühlers (37, 38, 39, 46) eine zylindrische oder rohrartige Mantelwand (47) aufweist, wobei der Zulaufstutzen (41) und der Ablaufstutzen (42) in Axialrichtung der Mantelwand (47) hintereinander an der Mantelwand (47) positioniert sind.

7. Getriebeturbomaschine nach einem der Ansprüche 1 bis 5, **dadurch gekennzeichnet, dass** das Gehäuse des jeweiligen Kühlers (37, 38, 39, 46) eine zylindrische oder rohrartige Mantelwand (47) aufweist, wobei der Zulaufstutzen (41) und der Ablaufstutzen (42) an einer Axialposition der Mantelwand (47) nebeneinander an der Mantelwand (47) positioniert sind.

8. Getriebeturbomaschine nach einem der Ansprüche 1 bis 7, **dadurch gekennzeichnet, dass** das Gehäuse des jeweiligen Kühlers (37, 38, 39, 46) ein Strömungsvergleichmäßigungselement (44) aufnimmt, welches stromabwärts des Zulaufstutzens (41) und stromaufwärts des Wärmetauschers (43) positioniert ist.

9. Getriebeturbomaschine nach Anspruch 8, **dadurch gekennzeichnet, dass** das Strömungsvergleichmäßigungselement (44) ein plattenartiges Lochblech ist.

## Claims

1. A geared turbomachine (10), having a gear unit (11), a drive unit (12), and multiple output units (13, 14, 15, 16), which are integrated into a machine train;
wherein the gear unit (11) includes a central bull gear (17) with a bull gear shaft (18) and multiple pinions (21, 23, 25) with pinion shafts (22, 24, 26) meshing with the bull gear (17);
wherein the drive unit (12) is configured as steam turbine, in which for providing mechanical drive power a first process gas is expanded;
wherein a first output unit (13) is configured as at least two-stage main compressor in which, utilising the mechanical drive power provided by the drive unit (12), a second process gas is compressed, wherein between each two stages of the main compressor (13) an intercooler (36) each is connected in order to cool the second process gas;
wherein multiple second output units (14, 15, 16) are configured as geared compressors, in which utilising the mechanical drive power provided by the drive unit (12) the second process gas is further compressed, wherein between the last stage of the main compressor (13) and the first geared compressor (14) and between each two geared compressors (14, 15, 16) an intercooler (37, 38, 46) and downstream of the last geared compressor (15) an end cooler (39) is arranged in order to cool the second process gas;
**characterised in that**
each intercooler (36, 37, 38, 46) and the end cooler (39) each comprises a housing (40) with an inlet connector (41) for the second process gas to be cooled and an outlet connector (42) for the cooled second process gas and a heat exchanger (43) received in the housing (40), wherein at least one intercooler (36, 37, 38, 46) and/or the end cooler (39) comprises a heat exchanger (43) in plate design,
wherein plate elements of the respective plate heat exchanger (43) are welded together.

2. The geared turbomachine according to Claim 1, **characterised in that** each intercooler (37, 38, 46) and the end cooler (39) comprise a heat exchanger (43) in plate design.

3. The geared turbomachine according to Claim 1, **characterised in that** at least one intercooler (36) between an axial stage (13a) of the first output unit (13) and a radial stage (13b) of the first output unit (13) comprises a heat exchanger (43) in plate design.

4. The geared turbomachine according to Claim 1 to 3, **characterised in that** at least one further intercooler (37, 38, 46) and/or the end cooler (39) comprise/s a heat exchanger (43) in fin tube bundle design.

5. The geared turbomachine according to Claim 4, **characterised in that** at least one further intercooler (37, 38, 46) and/or the end cooler (39) comprise/s a heat exchanger (43) in plate design.

6. The geared turbomachine according to any one of the Claims 1 to 5, **characterised in that** the housing of the respective cooler (37, 38, 39, 46) comprises a cylindrical or tubular lateral wall (47), wherein the inlet connector (41) and the outlet connector (42) are positioned in the axial direction of the lateral wall (47) one behind the other on the lateral wall (47).

7. The geared turbomachine according to any one of the Claims 1 to 5, **characterised in that** the housing of the respective cooler (37, 38, 39, 46) comprises a cylindrical or tubular lateral wall (47), wherein the inlet connector (41) and the outlet connector (42) are positioned in an axial position of the lateral wall (47) next to one another on the lateral wall (47).

8. The geared turbomachine according to any one of the Claims 1 to 7, **characterised in that** the housing of the respective cooler (37, 38, 39, 46) receives a flow equalisation element (44) which is positioned downstream of the inlet connector (41) and upstream of the heat exchanger (43).

9. The geared turbomachine according to Claim 8, **characterised in that** the flow equalisation element (44) is a plate-like perforated sheet.

## Revendications

1. Turbomachine à engrenages (10), qui comprend une boîte de vitesses (11), une unité d'entraînement (12) et plusieurs unités de sortie (13, 14, 15, 16), qui sont intégrées dans un train de machines ;
dans laquelle la boîte de vitesses (11) comporte une grande roue centrale (17) avec un grand arbre de roue (18) et plusieurs pignons (21, 23, 25) s'engrenant dans la grande roue (17) comportant des arbres de pignon (22, 24, 26),
dans laquelle l'unité d'entraînement (12) est conçue comme une turbine à vapeur, dans laquelle un premier gaz de traitement est détendu pour fournir une puissance d'entraînement mécanique ;
dans laquelle une première unité de sortie (13) est conçue comme un compresseur principal à au moins deux étages, dans laquelle un deuxième gaz de traitement est comprimé à l'aide de la puissance d'entraînement mécanique fournie par l'unité d'entraînement (12), dans laquelle entre respectivement deux étages du compresseur principal (13) un refroidisseur intermédiaire (36) est respectivement branché afin de refroidir le deuxième gaz de traitement ;
dans laquelle plusieurs deuxièmes unités de sortie (14, 15, 16) sont conçues comme des compresseurs à engrenages, dans lesquelles en utilisant la puissance d'entraînement mécanique fournie par l'unité d'entraînement (12) le deuxième gaz de traitement est davantage comprimé, dans laquelle un refroidisseur intermédiaire (37, 38, 46) est disposé entre le dernier étage du compresseur principal (13) et le premier compresseur à engrenages (14) et entre respectivement deux compresseurs à engrenages (14, 15, 16) et en aval du dernier compresseur à engrenages (15) un refroidisseur final (39) est disposé pour refroidir le deuxième gaz de traitement ;
**caractérisée en ce que**
chaque refroidisseur intermédiaire (36, 37, 38, 46) et le refroidisseur final (39) présente respectivement un carter (40) avec un raccord d'entrée (41) pour le deuxième gaz de processus à refroidir et un raccord de sortie (42) pour le deuxième gaz de processus refroidi et un échangeur thermique (43) logé dans le carter (40), dans laquelle au moins un refroidisseur intermédiaire (36, 37, 38, 46) et/ou le refroidisseur final (39) présente un échangeur thermique (43) en forme de plaques, dans laquelle des éléments de plaques de l'échangeur thermique à plaques respectif (43) sont soudés.

2. Turbomachine à engrenages selon la revendication 1, **caractérisée en ce que** chacun des refroidisseurs intermédiaires (37, 38, 46) et le refroidisseur final (39) comporte un échangeur thermique (43) a une construction en plaquez.

3. Turbomachine à engrenages selon la revendication 1, **caractérisée en ce qu'**au moins un refroidisseur intermédiaire (36) comporte un échangeur thermique (43) entre un étage axial (13a) de la première unité de sortie (13) et un étage radial (13b) de la première unité de sortie (13) et présente une construction en plaques.

4. Turbomachine à engrenages selon les revendications 1 à 3, **caractérisée en ce qu'**au moins un autre refroidisseur intermédiaire (37, 38, 46) et/ou le refroidisseur final (39) comporte un échangeur thermique (43) dans une conception en faisceau de tubes à ailettes.

5. Turbomachine à engrenages selon la revendication 4, **caractérisée en ce qu'**au moins un refroidisseur intermédiaire supplémentaire (37, 38, 46) et/ou le refroidisseur final (39) comporte un échangeur thermique (43) en forme de plaque.

6. Turbomachine à engrenages selon une des revendications 1 à 5, **caractérisée en ce que** le carter du refroidisseur respectif (37, 38, 39, 46) présente une paroi d'enveloppe cylindrique ou tubulaire (47), dans laquelle le raccord d'entrée (41) et le raccord de sortie (42) sont positionnés l'un derrière l'autre sur la paroi d'enveloppe (47) dans la direction axiale de la paroi d'enveloppe (47) .

7. Turbomachine à engrenages selon une des revendications 1 à 5, **caractérisée en ce que** le carter du refroidisseur respectif (37, 38, 39, 46) présente une paroi d'enveloppe cylindrique ou tubulaire (47), dans laquelle le raccord d'entrée (41) et le raccord de sortie (42) sont positionnés l'un à côté de l'autre sur la paroi de chemise (47) au niveau d'une position axiale de la paroi de chemise (47).

8. Turbomachine à engrenages selon une des revendications 1 à 7, **caractérisée en ce que** le carter du refroidisseur respectif (37, 38, 39, 46) reçoit un élément d'égalisation de débit (44), qui est situé en aval du raccord d'entrée (41) et en amont de l'échangeur thermique (43).

9. Turbomachine à engrenages selon la revendication 8, **caractérisée en ce que** l'élément d'égalisation de débit (44) est une plaque perforée en forme de plaque.
